# DEMANDE DE BREVET EUROPEEN

(11) **EP 3 858 665 A1**
(43) Date de publication de la demande: **04.08.2021**
(21) Numéro de dépôt: 21153130.6
(22) Date de dépôt: 25.01.2021
(51) Int. Cl.: B60N 2/879, B60N 2/885, B60R 11/02, B60R 11/00

(54) **APPUI-TÊTE D'UN SIÈGE DE VÉHICULE ÉQUIPÉ DE HAUT-PARLEURS**

(30) Priorité: 28.01.2020 FR 2000827
(71) Demandeur: RENAULT s.a.s., 92100 Boulogne-Billancourt (FR)
(72) Inventeur: BEAUFOUR, Thierry, 78690 Les Essarts Le Roi (FR); FAURANT, Aurore, 75014 Paris (FR); LESARTRE, Francois, 91330 Yerres (FR); PARCELLIER, Christophe, 78390 Bois d'Arcy (FR); ROLFO, Claudio, 91490 Milly La Foret (FR)

(57) **Abrégé**

L'invention se rapporte à un appui-tête (1) d'un siège de véhicule comprenant une partie centrale (2) fixe bordée par deux bourrelets (3, 4) comprenant chacun une pièce support (5) montée pivotante sur un axe de rotation d'une structure de l'appui-tête (1) de sorte que chaque bourrelet (3, 4) soit apte à pivoter autour dudit axe relativement à la partie centrale (2).

Selon l'invention, un haut-parleur est fixé à chaque pièce support (5), la direction de sortie du son émis par chaque haut-parleur dépendant de la position du bourrelet (3, 4) qui le porte relativement à la partie centrale (2).

## Description

La présente invention concerne un appui-tête d'un siège de véhicule équipé de haut-parleurs.

Actuellement, certains sièges de véhicule comprennent des appui-têtes équipés de haut-parleurs pour permettre aux occupants d'écouter de la musique alors que le véhicule est en phase de roulage.

La demande FR 2696388 décrit un appui-tête pour véhicule automobile, comportant une partie repose-tête munie d'au moins un haut-parleur apte à émettre des ondes sonores destinées à l'usager de l'appui-tête. Le haut-parleur constitue un terminal écouteur de radiotéléphone.

Un appui-tête selon l'invention est doté de deux haut-parleurs dont le montage particulier dans ledit haut-parleur permet d'optimiser la qualité du son émis par ceux-ci.

Afin de bien comprendre le positionnement des différentes pièces impliquées dans un appui-tête selon l'invention, la description est réalisée en supposant que le siège sur lequel est fixé l'appui-tête est monté dans un véhicule et en faisant donc référence à un repère orthonormé direct XYZ lié audit véhicule et dans lequel X est un axe longitudinal avant-arrière du véhicule orienté vers l'arrière, Y est un axe transversal orienté vers la droite du véhicule et Z est un axe vertical dirigé vers le haut.

L'invention a pour objet un appui-tête d'un siège de véhicule comprenant une partie centrale fixe bordée par deux bourrelets comprenant chacun une pièce support montée pivotante sur un axe de rotation d'une structure de l'appui-tête, de sorte que chaque bourrelet soit apte à pivoter autour dudit axe relativement à la partie centrale.

Selon l'invention, un haut-parleur est fixé à chaque pièce support, la direction de sortie du son émis par chaque haut-parleur dépendant de la position du bourrelet qui le porte relativement à la partie centrale. Le principe de l'invention consiste à tirer profit de pièces support mobiles déjà présentes dans l'appui-tête et, permettant de régler la position des bourrelets, pour fixer des haut-parleurs dans ledit appui-tête. De cette manière chaque pièce support présente une double fonctionnalité, d'une part permettre de régler la position des deux bourrelets de l'appui-tête relativement à la partie centrale, et d'autre part de supporter un haut-parleur. La direction de sortie du son des haut-parleurs sera dépendante du positionnement des deux pièces support au sein de l'appui-tête. Les pièces support sont enfouies dans l'appui-tête et ne sont donc pas visibles depuis l'extérieur du siège sur lequel est fixé ledit appui-tête. Préférentiellement, chaque pièce support est réalisée en matière plastique. Avantageusement, les deux pièces support sont identiques et ont avantageusement la forme d'une oreille.

Selon une caractéristique possible de l'invention, chaque pièce support est de faible épaisseur et présente une face avant et une face arrière qui sont parallèles, le haut-parleur étant fixé à la face avant. De cette manière, lorsqu'un occupant et assis sur le siège qui est doté de son appui-tête, chaque haut-parleur est intercalé entre une pièce support et la tête de cet occupant. En réglant la position des bourrelets de l'appui-tête, l'occupant peut optimiser le maintien de sa tête dans l'appui-tête ainsi que la direction d'émission du son en provenance des haut-parleurs.

Selon une caractéristique possible de l'invention, chaque pièce support présente sur sa périphérie un évent acoustique sous la forme d'un conduit d'air comprenant une entrée et une sortie. Cet évent acoustique permet d'accroitre la qualité du son sortant des haut-parleurs. Non seulement les pièces support maintiennent les haut-parleurs dans l'appui-tête, mais elles permettent également d'influencer favorablement les conditions d'émission du son en provenance desdits haut-parleurs. Ce conduit d'air tangente un bord périphérique extérieur de la pièce support et peut se présenter sous la forme, soit d'une boucle ouverte, soit d'une boucle fermée. Avantageusement, l'entrée de l'évent débouche sur la face arrière de la pièce support et la sortie de l'évent débouche sur la face avant.

Selon une caractéristique possible de l'invention, la sortie se présente sous la forme d'un cornet évasé. Ce type de sortie permet une amplification des basses fréquences et une amélioration du rendu acoustique des haut-parleurs..

Selon une caractéristique possible de l'invention, l'évent forme une boucle ouverte. Autrement dit, l'évent s'étend seulement sur une partie de la périphérie de la pièce support.

Selon une caractéristique possible de l'invention, chaque pièce support présente une ouverture circulaire délimitée par une paroi, chaque ouverture étant entourée par une gorge annulaire pratiquée dans ladite paroi. Cette ouverture est destinée à accueillir un plot cylindrique d'un haut-parleur, et la gorge permet de stabiliser le plot relativement à la pièce support.

Selon une caractéristique possible de l'invention chaque pièce support comprend deux extensions parallèles dotées chacune d'une ouverture circulaire traversante, les deux ouvertures étant alignées pour permettre à un axe de la structure de l'appui-tête de les traverser. Chaque pièce support contribue à déplacer en rotation un bourrelet de l'appui-tête pour les rapprocher ou les éloigner de la tête d'un occupant qui serait assis sur le siège. Il n'existe aucun mouvement d'un bourrelet relativement à la pièce qui le supporte.

Selon une caractéristique possible de l'invention, chaque extension comprend une butée permettant de limiter l'amplitude de rotation de la pièce support sur la structure de l'appui-tête. En effet, la rotation des bourrelets de l'appui-tête au-delà d'une certaine amplitude ne présente plus d'intérêt. Il est donc souhaitable de limiter l'angle de rotation desdits bourrelets relativement à la partie centrale fixe de l'appui-tête. Cette butée peut par exemple être matérialisée par une pièce solide saillant de l'extension.

Selon une caractéristique possible de l'invention, chaque pièce support comprend au moins une nervure de rigidification, ladite nervure étant dans une position centrale dans ladite pièce. Selon une variante de réalisation d'un appui-tête selon l'invention, chaque pièce support comprend un réseau de nervures de rigidification. Le nombre de nervures et leur disposition est fonction du matériau constitutif de la pièce support.

Selon une caractéristique possible de l'invention, chaque haut-parleur est fixé à la pièce support par clippage. Il s'agit d'un moyen de fixation simple et rapide, ne nécessitant ni un outillage spécifique ni des manipulations compliquées.

L'invention a pour autre objet, une pièce support pour la réalisation d'un appui-tête selon l'invention.

Selon l'invention, la pièce support présente sur sa périphérie un évent acoustique sous la forme d'un conduit d'air comprenant une entrée et une sortie.

Un appui-tête selon l'invention présente l'avantage de posséder une structure simplifiée grâce à la présence de pièces support ayant une double fonction, celle qui est courante et qui consiste à permettre le pivotement des bourrelets, et l'autre qui est plus originale et qui consiste à supporter des haut-parleurs en améliorant la qualité du son émis par celui-ci. Il a de plus l'avantage de mettre en œuvre des pièces support ayant une double fonction tout en demeurant d'une géométrie simple et d'un encombrement constant par rapport aux haut-parleurs existants.

On donne ci-après une description détaillée d'un mode de réalisation préféré d'un appui-tête selon l'invention.
[Fig. 1] représente une vue en perspective d'un appui-tête selon l'invention dont une partie a été arbitrairement retirée pour visualiser une pièce support,
[Fig. 2] représente une vue en perspective d'un appui-tête selon l'invention et dont les deux pièces support peuvent être vues par transparence,
[Fig. 3] représente une vue en perspective des deux pièces support d'un appui-tête selon l'invention,
[Fig. 4] représente une vue en perspective sous un autre angle des pièces support de la figure 3
[Fig. 5] représente une vue en perspective d'une pièce support d'un appui-tête selon l'invention.

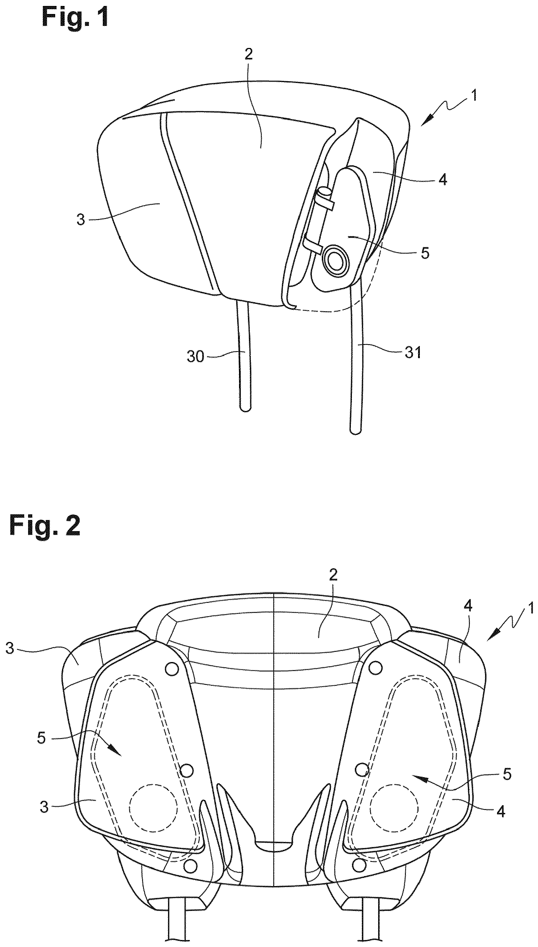

En se référant au figures 1 et 2, un appui-tête 1 selon l'invention comprend une partie centrale fixe 2 encadrée par deux bourrelets latéraux 3, 4. Ces deux bourrelets 3, 4 sont montés mobiles en rotation sur la partie centrale 2 et peuvent passer d'une première position élargie pour laquelle ils sont sensiblement alignés sur ladite partie centrale 2 dans un même plan, à une deuxième position plus resserrée pour laquelle ils ont pivotés vers l'avant pour se rapprocher de la tête d'un occupant qui serait assis sur le siège doté de l'appui-tête 1 selon l'invention. La deuxième position est variable car les deux bourrelets latéraux 3, 4 peuvent pivoter depuis la première position avec un angle variable. Le pivotement de chaque bourrelet 3, 4 s'effectue par l'intermédiaire d'une pièce support 5, qui est montée pivotante dans la partie centrale 2 de l'appui-tête. L'appui-tête 1 présente une structure comprenant notamment deux tiges 30, 31 parallèles permettant de régler en hauteur ledit appui-tête sur un dossier de siège et les deux pièces support sont montées pivotantes sur ladite structure.

Il est important de souligner que la figure 2 ne montre pas quatre bourrelets différents, mais uniquement deux bourrelets différents, dont chacun occupe deux positions distinctes montrées sur ladite figure.

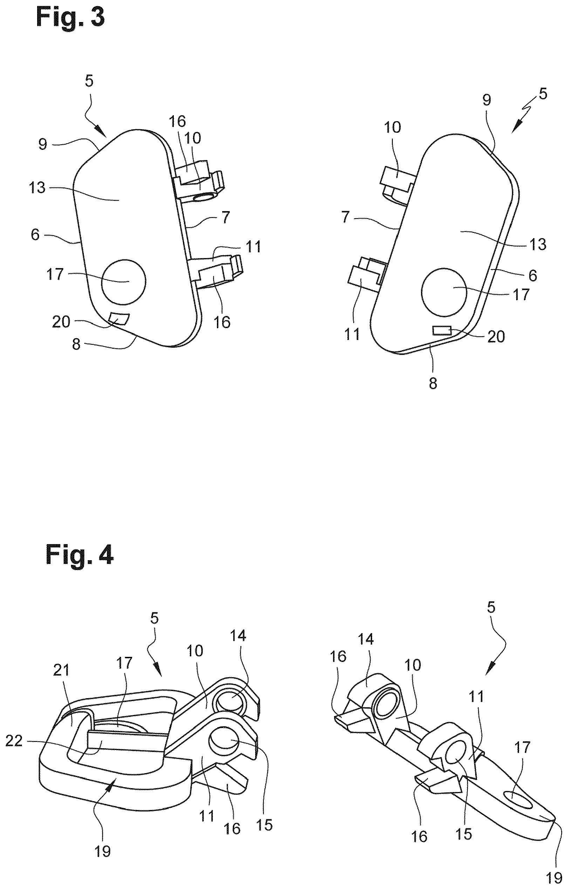

En se référant aux figures 3, 4 et 5, chaque pièce-support 5 a une forme sensiblement trapézoïdale, avec deux bords parallèles 6, 7 de longueur différente joints à leurs extrémités par deux bords divergents 8, 9. Tous les bords 6, 7, 8, 9 de la pièce support 5 sont rectilignes. L'un des deux bords parallèles 6, 7 est plus long que l'autre bord, et deux pattes de fixation 10, 11 sont fixées audit bord le plus long. Chaque pièce support 5 comprend deux faces principales 12, 13 parallèles, constituées par une face avant 12 et par une face arrière 13. Les deux pattes de fixation 10, 11 sont parallèles entre elles et sont perpendiculaires à la face avant 12 et à la face arrière 13. Chaque patte 10, 11 possède une extrémité qui est percée par un orifice 14, 15 traversant circulaire. Lesdits deux orifices 14, 15 sont parallèles et distants l'un de l'autre, si bien qu'un axe cylindrique de la structure de la partie centrale 2 de l'appui-tête 1 peut passer par lesdits deux orifices 14, 15.

Chaque patte de fixation 10, 11 supporte une butée 16 sous la forme d'une pièce solide ayant la forme d'un coin. Les deux butées 16 sont parfaitement alignées l'une sur l'autre, et ont pour objet de limiter l'amplitude de rotation des deux pièces support 5 entre la première position élargie et la deuxième position resserrée maximale.

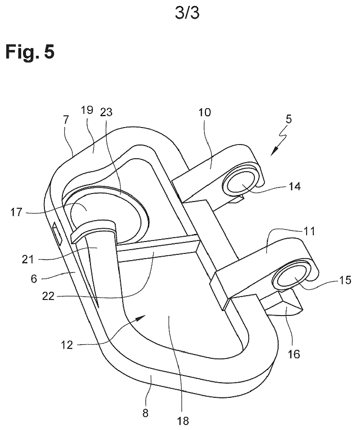

En se référant aux figures 3 et 5, chaque pièce support 5 présente une ouverture circulaire 17 traversante.

En se référant à la figure 3, la face arrière 13 de chaque pièce support est lisse.

En se référant à la figure 5, la face avant 12 de chaque pièce support 5 présente un évidement 18 cerné par un bord périphérique 19 ayant une certaine épaisseur. Ce bord périphérique 19 délimite un conduit d'air s'étendant sur une partie de la périphérie totale de la pièce support 5. Ce conduit d'air 19 présente une entrée d'air 20 débouchant sur la face arrière 13 comme cela est illustré à la figure 3, et une sortie d'air 21 débouchant sur la face avant 12 comme cela est illustré à la figure 5.

L'entrée d'air 20 est matérialisée par un trou réalisé dans la face arrière 13 et la sortie d'air 21 est matérialisée par un cornet divergent, saillant de la face avant 12. Le conduit d'air serpente sur une partie seulement de la périphérie totale de la pièce support 5.

En se référant à la figure 5, une nervure 22 rectiligne joignant deux segments parallèles du bord périphérique 19 permet de rigidifier chaque pièce support 5. La pièce support peut par exemple être fabriquée dans une multiplicité de matière plastique. Ainsi, en fonction de la matière plastique choisie, chaque pièce support 5 pourra être dotée d'une ou de plusieurs nervures de renfort disposées en parallèle ou en étant perpendiculaires les unes aux autres. Le bord 23 de la paroi de la pièce support 5 délimitant l'ouverture traversante 17, présente une épaisseur réduite par rapport à celle du reste de ladite paroi, permettant de définir une gorge annulaire 23. L'ouverture traversante 17 de chaque pièce support 5 est prévue pour recevoir un plot cylindrique d'un haut-parleur, et la gorge annulaire 23 permet de bien positionner ledit haut-parleur par rapport à ladite pièce support 5.

Chaque haut-parleur est préférentiellement fixé par clippage sur une pièce support 5. Le conduit d'air périphérique 19 génère une amplification des basses fréquences et une amélioration du rendu acoustique.

En conclusion, le principe de l'invention repose sur la présence de deux pièces support 5 dans l'appui-tête 1, initialement conçues pour faire pivoter les deux bourrelets latéraux 3, 4 du dit appui-tête 1, et qui ont été légèrement modifiées pour pouvoir chacune supporter un haut-parleur et pour améliorer la qualité du son sortant dudit haut-parleur.

## Revendications

1. Appui-tête (1) d'un siège de véhicule comprenant une partie centrale (2) fixe bordée par deux bourrelets (3, 4) comprenant chacun une pièce support (5) montée pivotante sur un axe de rotation d'une structure de l'appui-tête (1) de sorte que chaque bourrelet (3, 4) soit apte à pivoter autour dudit axe relativement à la partie centrale (2), **caractérisé en ce qu'**un haut-parleur est fixé à chaque pièce support (5), et **en ce que** la direction de sortie du son émis par chaque haut-parleur dépend de la position du bourrelet (3, 4) qui le porte relativement à la partie centrale (2).

2. Appui-tête selon la revendication 1, **caractérisé en ce que** chaque pièce support (5) est de faible épaisseur et présente une face avant (12) et une face arrière (13) qui sont parallèles, et **en ce que** le haut-parleur est fixé à la face avant (12).

3. Appui-tête selon la revendication 2, **caractérisé en ce que** chaque pièce support (5) présente sur sa périphérie un évent acoustique (19) sous la forme d'un conduit d'air comprenant une entrée (20) et une sortie (21).

4. Appui-tête selon la revendication 3, **caractérisé en ce que** la sortie (21) se présente sous la forme d'un cornet évasé.

5. Appui-tête selon l'une quelconque des revendications 3 ou 4, **caractérisé en ce que** l'évent (19) forme une boucle ouverte.

6. Appui-tête selon l'une quelconque des revendications 1 à 5, **caractérisé en ce que** chaque pièce support (5) présente une ouverture circulaire (17) délimitée par une paroi, et **en ce que** chaque ouverture (17) est entourée par une gorge annulaire (23) pratiquée dans ladite paroi.

7. Appui-tête selon l'une quelconque des revendications 1 à 6, **caractérisé en ce que** chaque pièce support (5) comprend deux extensions (10, 11) parallèles dotées chacune d'une ouverture (14, 15) circulaire traversante, et **en ce que** les deux ouvertures (14, 15) sont alignées pour permettre à un axe de la structure de l'appui-tête (1) de les traverser.

8. Appui-tête selon la revendication 7 **caractérisé en ce que** chaque extension (10, 11) comprend une butée (16) permettant de limiter l'amplitude de rotation de la pièce support (5) sur la structure de l'appui-tête (1).

9. Appui-tête selon l'une quelconque des revendications 1 à 8, **caractérisé en ce que** chaque pièce support (5) comprend au moins une nervure (22) de rigidification, et **en ce que** ladite nervure (22) est dans une position centrale dans ladite pièce (5).

10. Appui-tête selon l'une quelconque des revendications 1 à 9, **caractérisé en ce que** chaque haut-parleur est fixé à la pièce support (5) par clippage.

11. Pièce support (5) pour la réalisation d'un appui-tête (1) selon la revendication 3, **caractérisé en ce qu'**elle présente sur sa périphérie un évent acoustique (19) sous la forme d'un conduit d'air comprenant une entrée (20) et une sortie (21).
